**Europäisches Patentamt**

**European Patent Office**

**Office européen des brevets**

(19)

(11) **EP 1 229 324 A1**

(12) **EUROPÄISCHE PATENTANMELDUNG**

(43) Veröffentlichungstag:
   **07.08.2002 Patentblatt 2002/32**

(51) Int Cl.$^7$: **G01N 27/407**, G01N 27/49

(21) Anmeldenummer: **02100061.7**

(22) Anmeldetag: **28.01.2002**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **02.02.2001 DE 10104709**

(71) Anmelder: **SIEMENS AKTIENGESELLSCHAFT**
   **80333 München (DE)**

(72) Erfinder:
   • **Fleischer, Maximilian**
    **85356, Höhenkirchen (DE)**
   • **Meixner, Prof.-Dr. Hans**
    **85540, Haar (DE)**
   • **Reinhardt, Dr. Götz**
    **71032, Böblingen (DE)**

(54) **Betriebsverfahren für einen Pumpsensor**

(57)   Mit einem weiterentwickelten Verfahren zum Betrieb eines Pumpsensors ist eine Steigerung des Stromflusses bei der Gasdetektion mit einem Pumpsensor erzielbar, so dass die bisher zu kleinen Sensorsignale detektierbar sind. Dies wird erzielt durch intermittierende Messung am Pumpsensor, wobei während einer ersten Zeit ($t_1$) Gas in einer Kavität des Pumpsensors gesammelt wird und in einer anschließenden zweiten Zeit ($t_2$) die Messung der Konzentration des Gases durch entsprechendes Abpumpen geschieht.

## FIG 6A

EP 1 229 324 A1

# FIG 6B

**Beschreibung**

Die Erfindung betrifft ein Verfahren zum Betrieb eines Gassensors, insbesondere zum Auslesen eines mehrstufigen Pumpsensors.

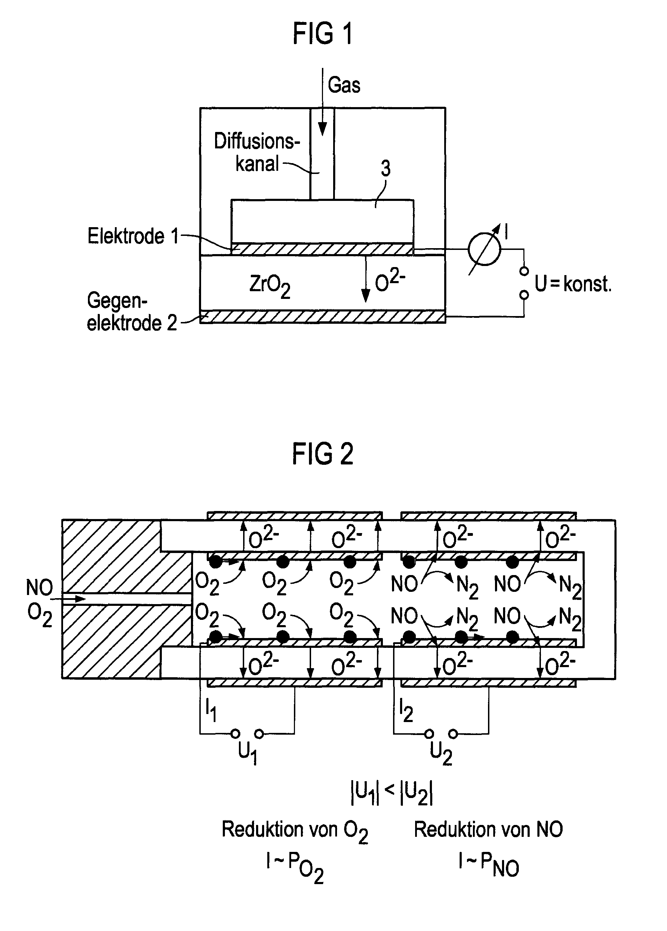

Zur selektiven Detektion von Einzelgasen in Gasgemischen wie z.B. Verbrennungsabgasen hat sich die Technologie von Diffusionsbegrenzten Pumpsensoren, die auch als amperometrische Sensoren bezeichnet werden, sehr bewährt. Der aus dem Stand der Technik bekannte Grundaufbau ist in Fig. 1 angegeben.

Der Aufbau ist auf ca. 600°C geheizt, wodurch das $ZrO_2$ eine starke Sauerstoffionenleitfähigkeit annimmt. Durch die definierte Diffusionsöffnung tritt das Zielgas, beispielsweise Sauerstoff in die Kavität ein. Der Sauerstoff wird an der oben- bzw. innenliegenden Elektrode 1 des $ZrO_2$ aufgespalten und zu $O^{2-}$ reduziert und durchläuft aufgrund der anliegenden Spannung als Ionenstrom das $ZrO_2$. An der Gegenelektrode 2 des $ZrO_2$ wird das Ion wieder zum ungeladenen Sauerstoff oxidiert. Bei diesem "Herauspumpen" des $O_2$ aus der Kammer 3 wird im äußeren Stromkreis ein der transportierten Sauerstoffmenge proportionaler Strom gemessen, welcher als Sensorsignal dient, wobei jedes $O_2$-Molekül die Ladung $4e^-$ bewirkt.

Prinzipiell können mit derartigen Aufbauten auch andere Gase umgeladen werden. So ist z.B. über eine entsprechend eingestellte größere Spannung auch die Detektion von NO über dessen Reduktion zu $N_2$ möglich. Allerdings würden sich im Fall einer Zelle gemäß Fig. 1 dann das Sauerstoff und das NO-Signal überlagern.

Im bisher üblichen Betrieb wird die von außen angelegte Spannung konstant gehalten und so groß gewählt, dass sofort sämtlicher im Inneren der Kavität befindlicher Sauerstoff entfernt wird. Da die Rate der Nachdiffusion des $O_2$ von der Umgebung in die Kammer in erster Näherung linear vom Partialdruck des $O_2$ in der äußeren Umgebung abhängt, tritt ein von dem äußeren Partialdruck linear abhängiger Strom im Messkreis als Messsignal auf.

In letzter Zeit werden auch verstärkt mehrstufige Pumpsensoren verwendet, ein Prinzipbild hierfür zeigt Fig. 2. Ziel ist, eine Möglichkeit zur selektiven Detektion von "nicht Sauerstoff" Gasen, beispielsweise NOx, HC, bei gleichzeitiger Anwesenheit von $O_2$ zu erzielen.

Auch hier tritt das Gas durch eine definierte Diffusionsöffnung in eine Kavität ein. Es existiert eine erste Pumpstufe, bei der z.B. der Sauerstoff durch die oben beschriebene elektrochemische Reaktion komplett entfernt wird. Das verbleibende Gas diffundiert dann meist über einen vorbestimmten Diffusionswiderstand zur zweiten Pumpstufe an der im Beispiel der NOx-Detektion das NO zu $O^{2-}$ und $N_2$ umgesetzt wird. Das $O^{2-}$ wandert als Ion durch das $ZrO_2$ und erzeugt im äußeren Kreis der zweiten Stufe einen Strom, der das Signal des NOx-Sensors darstellt. Der Stickstoff ist bei den herrschenden Bedingungen inert und diffundiert durch die Diffusionsöffnung wieder aus der Kavität heraus.

Im bisher üblichen Betrieb dient die erste Pumpstufe zum kompletten Entfernen des $O_2$ aus dem Messgas, bzw. zum Einstellen eines definiert kleinen Sauerstoff-Partialdrucks. An der zweiten Pumpstufe wird die Messspannung konstant gehalten und so groß gewählt, dass das NO quantitativ zu $O^{2-}$ und $N_2$ umgesetzt wird. Dies erzeugt wiederum im äußeren Kreis der zweiten Pumpstufe einen der NO-Konzentration der umgebenden Gasatmosphäre proportionalen Strom.

Das Problem in praktischen Ausführungen ist, dass dieser Strom extrem klein ist. Typische Werte liegen im Bereich 0,2-2 µA für zweistufige Pumpsonden zur NO-Detektion. Derartige Ströme sind generell nur schwer reproduzierbar zu messen, die entsprechende Schaltung ist teuer und anfällig. Zusätzlich zum Problem der störungsfreien und kostengünstigen Messung derartig kleiner Ströme treten zwei weitere wesentliche Messverfälschungen auf:

- im Kraftfahrzeugbetrieb ergeben sich durch Zündkerze und Zündspule elektromagnetische Einstreuungen,

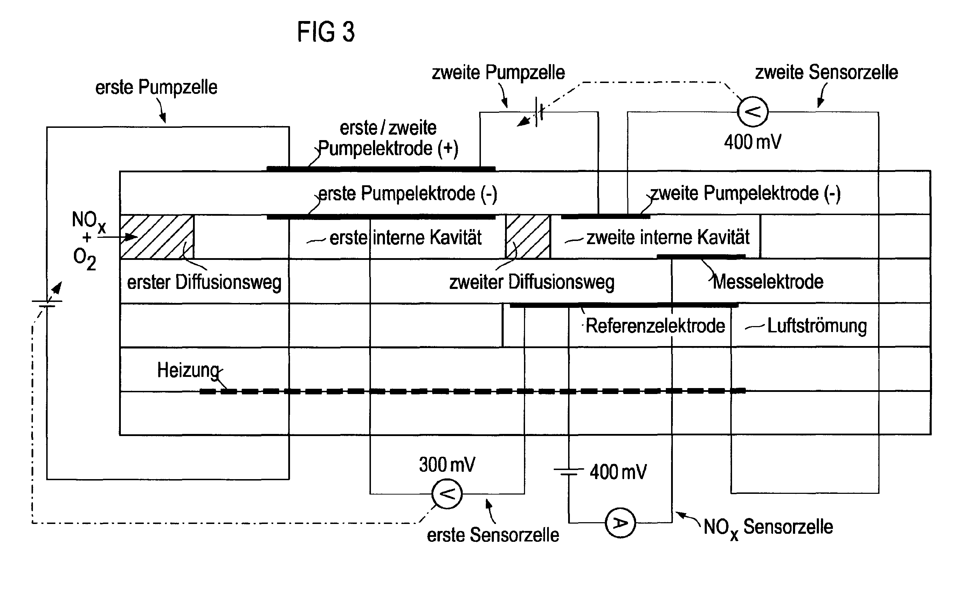

- es existieren vagabundierende Leitfähigkeiten im geheizten keramischen Sensoraufbau entsprechend Fig. 3.

In den deutschen Patentanmeldungen P 10064668.9 und P 10064667.0 werden mehrstufige Pumpsensoren beschrieben, die anhand von speziellen Aufbauten in Dickschichttechnik kostengünstig darstellbar sind bzw. in einem hybriden System mit resistiven Gassensoren zur Erhöhung der Detektionssicherheit in einem Sensor gemeinsam betrieben werden.

Im Stand der Technik wurden bisher folgende Lösungsansätze verfolgt:

• Verwendung einer äußerst empfindlichen und damit aufwendigen Primärelektronik, um die kleinen Ströme erfassen zu können,

• Aufwendige Kompensation von Querströmen des Aufbaus durch Abgleich der individuellen Elektronik auf den individuellen Sensor,

• Akzeptieren einer Begrenzung der Messgenauigkeit, da bisher keine bessere Lösung verfügbar war.

Das Ziel der Erfindung besteht in der Bereitstellung eines Verfahrens zur Erzeugung von reproduzierbaren Sensorsignalen bei Pumpsensoren.

Dies wird erreicht durch ein Verfahren mit den Merkmalen entsprechend Anspruch 1.

Der Erfindung liegt die Erkenntnis zugrunde dass eine Steigerung des Stromflusses bei Sensorsignalen in der Gasdetektion in einer Pumpstufe durch eine intermittierende Messung erzielbar ist, was erreicht wird mit dem Sammeln des Messgases in einer Messkavität für eine einstellbare Zeit t1, wobei in Anschluss daran während einer Zeitdauer t2 das gesamte Messgas durch Anlegen einer entsprechenden Pumpspannung umgesetzt wird.

Bei der bisherigen Betriebsart der Sensoren, erfolgt eine kontinuierliche Umsetzung des Zielgases, wobei sich in der zur Messung verwendeten Kammer ein Gleichgewicht dergestalt einstellt, dass das zur Messung in eine Kavität eindiffundierte Gas mit der gleichen Rate von der Messelektrode umgesetzt wird. Da die Zudiffusionsrate sehr klein gehalten werden muss, erfolgt nur ein geringer Stromfluss. Dies erlaubt eine kontinuierliche Messung mit Ansprechzeiten, die durch die Gaszudiffusion bestimmt sind.

Vorgehen entsprechend der Erfindung:

Es wird zur Erhöhung des Stroms in der zur Gasdetektion benutzten Kammer folgendermaßen vorgegangen:

Eine vorbestimmte Zeit t1 wird an die Messelektroden keine Spannung angelegt bzw. eine Spannung angelegt bei der die nachzuweisende Komponente noch nicht zur Erzeugung eines Sensorsignales umgesetzt wird. In dieser Zeit kann sich die Kavität, in der sich eine Messelektrode befindet, bis maximal zur Sättigungskonzentration mit dem Messgas füllen. Falls kein Verbrauch des Zielgases z.B. durch katalytische Reaktion an katalytisch aktiven Flächen in den Kavitäten stattfindet, entspricht die Sättigungskonzentration dem Wert wie in der umgebenden Atmosphäre.

Nach Ablauf von t1 wird für eine kurze Zeitspanne t2 eine ausreichend hohe Spannung an die Messelektroden gelegt, um das in die Kavität eindiffundierte Gas in kurzer Zeit quantitativ umzusetzen.

Da jetzt eine wesentlich vergrößerte Konzentration des zu detektierenden Gases vorliegt, nimmt damit (in erster Näherung) der Messstrom linear zu. Es kann daher (grob abgeschätzt) eine mittlere Erhöhung des Stroms um den Faktor $( t_2 + t_1)/ t_2$ erreicht werden.

Während des Anliegens einer bestimmten Spannung an den Messelektroden zum Pumpen wird das in der Messkavität vorhandene Zielgas verbraucht und bei entsprechender Taktung komplett aus der Kavität entfernt. Anschließend wird die angelegte Spannung wieder entfernt und es erfolgt der nächste Zyklus im intermittierenden Betrieb. Dabei werden erfindungsgemäß *nur Fälle, bei denen in der Zeit t2 nahezu sämtliche während der Zeit t1 eindiffundierte Moleküle umgesetzt. Andere Fälle würden zu komplizierten und schwer zu kontrollierenden Zeitabhängigkeiten über mehrere Zyklen führen.*

Wird in der Zeit t1 kein äußeres Potential angelegt, so ist es möglich, die Pumpvorrichtung während dieser Zeit als potentiometrische Sonde zu verwenden, um zusätzliche Informationen zu erlangen.

Im folgenden werden anhand von schematischen Figuren Ausführungsbeispiele beschrieben:

Figur 1 zeigt einen Prinzipaufbau eines diffusi*ons*-

*begrenzten Pumpsensors,*

Figur 2 zeigt einen Prinzipaufbau eines mehrstufigen Pumpsensors, hier insbesondere zur NOx-Detektion im Kfz-Abgas,

Figur 3 zeigt eine reale Ausführung eines zweistufigen Pumpsensors nach dem Stand der Technik, wobei ein elektrischer Heizer integriert ist, der mit Spannungen im Bereich mehrerer Volt und mit Strömen im Ampere-Bereich arbeitet,

Die Figuren 4A-4C zeigen eine Realisierung des Pumpaufbaus durch siebgedruckte Diffusionskanäle, wobei in 4A eine Schemazeichnung des Querschnittes, in 4B ein Ausführungsbeispiel in der Draufsicht und in 4C eine Unteransicht dargestellt sind,

Figur 5 zeigt die Darstellung einer Numerischen Rechnung für die Eindiffusion eines Zielgases in eine Dickschicht-Kavitätenstruktur gemäß Figur 4,

Die Figuren 6A-6B zeigen jeweils eine schematische Darstellung des zeitlichen Signalverlaufes, 6A) insbesondere die angelegte Messspannung $U_m$ und 6B) den Verlauf des Elektrodenstroms $I_m$ bei katalytisch hochaktiven Elektroden, wobei in der Zeit t3 kapazitive Effekte abklingen und sich der Strom danach durch das Leerpumpen der Messkavität vermindert, wobei der Strom nach dem erfolgten Abpumpen den Wert des diffusionsbedingten Grenzstroms $I_G$ annimmt,

Die Figuren 7A-7B zeigen schematische Darstellungen des Zeitverlaufes gemäß Variante b), wobei 7A die angelegte Messspannung $U_m$ wiedergibt und 7B den Verlauf des Elektrodenstroms $I_m$ bei katalytisch hochaktiven Elektroden; eingezeichnet sind die Zeitperioden t3 mit dem Abklingen der kapazitiven Effekte; t2 mit der Abnahme des Stromes durch das Abpumpen der Messkavität; nach dem erfolgten Abpumpen nimmt der Elektrodenstrom den Wert des diffusionsbedingten Grenzstroms $I_G$ an,

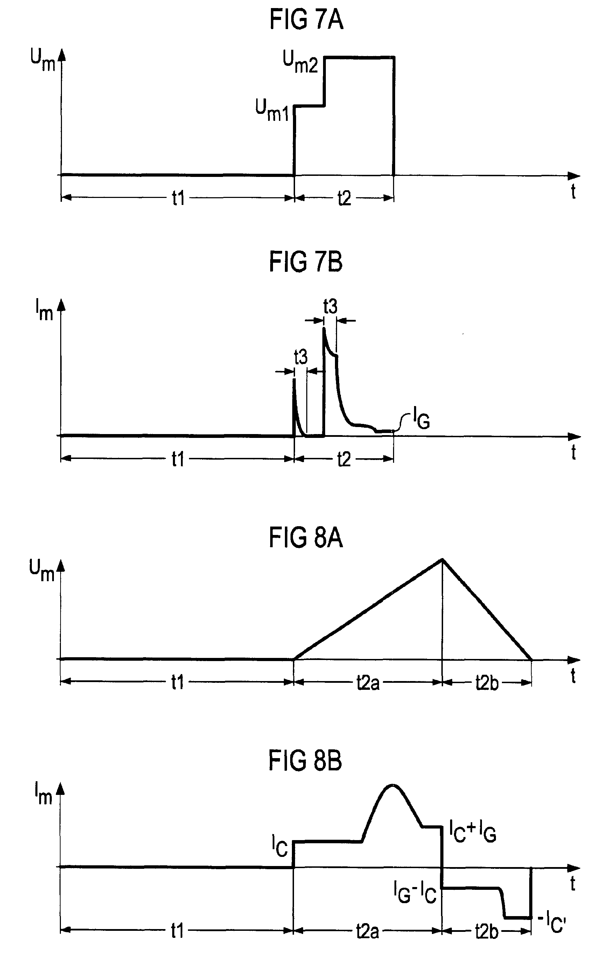

Die Figuren 8A-8B zeigen schematische Darstellungen des Zeitverlaufes gemäß Variante c), wobei 8A die angelegte Messspannung $U_m$ wiedergibt und 8B den Verlauf des Elektrodenstroms $I_m$ bei katalytisch hochaktiven Elektroden; zusätzlich zum konstanten Strom durch kapazitive Effekte ($I_C$) bildet sich ein Peak aus, der durch den elektrochemischen Pumpeffekt gebildet wird; die Auswertung seiner Fläche ergibt die Menge des Zielgases in der Kavität; wenn das angesammelte Gas aufgebraucht ist, fließt die Summe aus $I_C$ und dem Grenzstroms $I_G$; beim Zurückfahren der Spannungsrampe fließt zuerst die Differenz aus Grenzstrom $I_G$ und dem kapazitiven Strom $I_{C'}$, nach Unterschreiten der Zersetzungsgrenze nur noch $I_{C'}$,

Figur 9 zeigt eine Simulation des Leerpumpens bei der Füllung einer einfachen Pumpzelle mit Sauerstoff und Verwendung einer Silberelektrode unter Elimination kapazitativer Elektrodeneffekte; beim Start der Spannungsrampe wird der akkumulierte Sauerstoff aus der Kavität gepumpt, was einen höheren negativer Strom zur Folge hat; dann stellt sich wie beim herkömmlichen Verfahren der Grenzstrom ein; beim Zurückfahren der Spannung tritt in diesem Fall unterhalb der Nernst-Spannung aufgrund des Konzentrationsgradienten (von der Kammer zur Umgebung) eine Wiederbefüllung mit Sauerstoff auf.

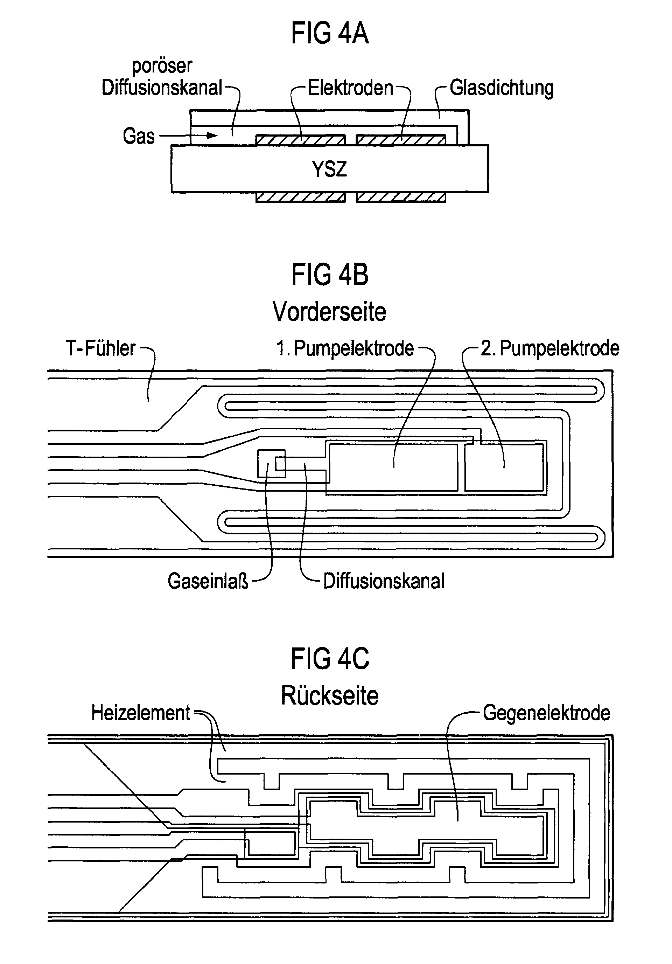

Neben den beschriebenen klassischen Aufbauten, kann das hierin beschriebene Betriebsverfahren z.B., auch für neuere Sensoraufbauten verwendet werden, die auf einer Realisierung der Diffusionsöffnung durch siebgedruckte poröse Schichten mit obenliegender Glasabdeckung basieren. Ein vorteilhaftes Beispiel hierfür zeigt Fig. 4.
Die Zeiten t1 und t2 sind so zu wählen, dass

- einmal möglichst weitgehend eine Gleichgewichtskonzentration mit der Umgebungsatmosphäre erreicht wird (während t1),
- das angesammelte Zielgas nahezu vollständig während der Pumpphase umgesetzt wird (t2), und
- die Summe t1+t2 möglichst klein bleibt, da diese die Ansprechzeit des Sensors bestimmt.

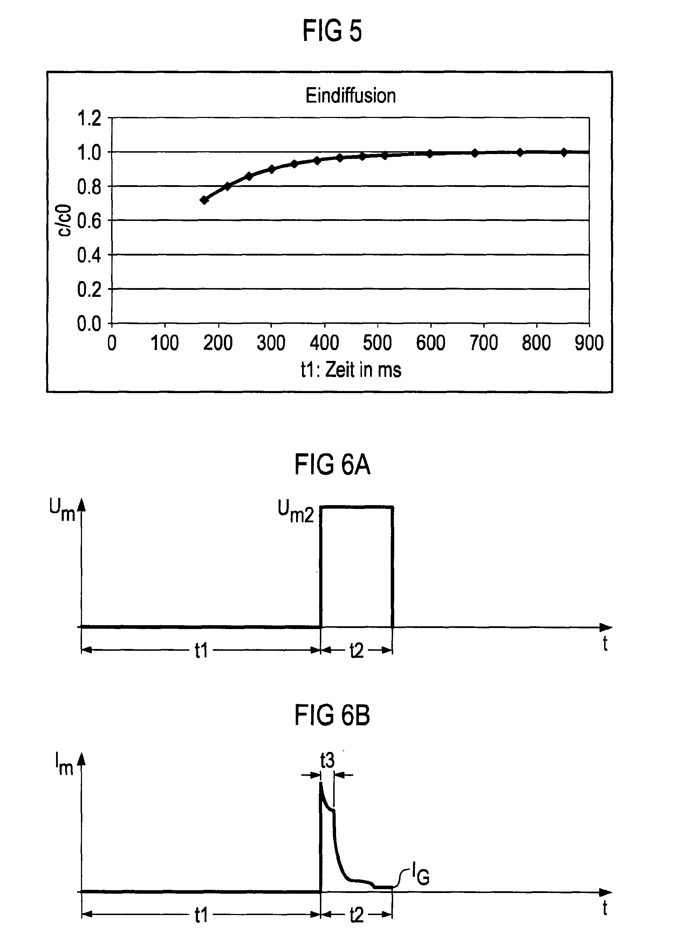

In der Praxis werden erfindungsgemäß Werte von typischerweise 0,5-2 s als t1 verwendet. Dies sind Zeitkonstanten, in denen sich typischerweise verwendete Kavitätenstrukturen durch Eindiffusion des Zielgases füllen. Die Fig. 5 zeigt als Erläuterung hierfür das Ergebnis einer Simulationsrechnung einer Struktur gemäß Fig. 4 für die Eindiffusion des Gases in den Messkanal zur Abschätzung eines sinnvollen Wertes für t1. Anfänglich befindet sich kein Zielgas im System, wobei die Befüllung der Kavität mit Gas aus der Umgebung dargestellt ist. Typische Werte für t2 liegen zwischen 50 und 200 ms. Die untere Grenze der Dauer der Messzeit t2 und damit der effektiven Stromverstärkung wird durch kapazitative Effekte der Pumpelektrode gegeben: Wenn die Pumpelektrode eine Potentialänderung erfährt, fließt ein Strom, um die entsprechende Kapazität aufzuladen bzw. zu entladen. Dieser Strom bewirkt eine Signalverfälschung, da er dem Pumpstrom überlagert wird. In der Praxis muss daher erst das Abklingen der kapazitativen Effekte abgewartet werden
Wie oben dargelegt, ist t2 durch kapazitative Effekte nach unten begrenzt. Folgende Verbesserungen sind noch möglich.

- Kürzere Zeiten für t2 und damit sehr hohe effektive Stromverstärkungen können bei Aufbauten verwendet werden, bei denen parasitäre Kapazitäten (z.B. der Zuleitungen) sowie Elektrodenkapazitäten minimiert wurden.
- Hochfahren der Elektrodenspannung in zwei Stufen:

Die erste Spannung muss noch unter der Zersetzungsspannung des Zielmoleküls liegen; damit werden nur kapazitive Effekte gemessen, d.h. es wird die Kapazität C bestimmt.
In der zweiten Stufe wird die Spannung dann über die Zersetzungsspannung erhöht, es werden kapazitive Effekte sowie auch Pumpeffekte gemessen, wobei durch Vergleich die kapazitativen Effekte herausgerechnet werden können; dies beruht auf der experimentell festgestellten Tatsache, dass die Elektrodenkapazität weitgehend spannungsunabhängig ist, wodurch sich eine Verstärkung des Messstroms um mehr als eine Größenordnung möglich sind.
Im Folgenden werden verschiedene Betriebsvarianten diskutiert

a) Konstantspannung > Zersetzungsspannung während t2
b) Zwei Spannungsstufen während t2
c) Spannungsrampe während t2

Zu Variante a):

Ein schematischer Überblick der angelegten Spannung sowie des zu erwartenden Stromes gibt Fig. 6 :
Der Wert unmittelbar nach dem Anlegen der Spannung ist zur Auswertung nicht sinnvoll zu verwenden, da unmittelbar nach Anlegen der Spannung ein Überschuss an Messgas zur Verfügung steht und der Startstrom von den jeweiligen Oberflächeneigenschaften der Elektrode stark beeinflusst ist. Zudem werden hier kapazitative Effekte den Strom stark beeinflussen, die erst nach einer dritten Zeit t3 abgeklungen sind.
Die kapazitativen Effekte sind nach einer gewissen Zeit t3 verschwunden, und dann wird je nach katalytischer Aktivität der Elektrode das Messgas in verschiedener Zeit aufgebraucht und der Strom reduziert sich. Am Ende wird der Grenzstrom $I_g$ erreicht sein.
Die Gaskonzentration wird hier durch die Gesamtmenge des sich in der Messkavität befindlichen Gases, welches während t1 angesammelt wird, bestimmt. Dies wird am Besten durch Aufintegration des Stroms während t2 bzw. t2 - t3 bestimmt. Das Abklingen der kapazitativen Effekte verursacht einen (bekannten) Messfehler, der durch eine Messwertkorrektur behoben werden kann.

Zu Variante b):

Untersuchungen zeigen, dass die Elektrodenkapazität weitgehend unabhängig von der angelegten Messspannung ist. Daher wird ausgehend von der Variante a) noch um eine weitere unterschiedliche erste Spannungsstufe Um1 erweitert, wobei hier zuerst eine Spannung unterhalb der Zersetzungsschwelle des relevanten Gases angelegt wird und dann die zweite Spannung Um2 oberhalb der Zersetzungsschwelle des relevanten Gases folgt, vgl. Fig. 7 in der die relevanten Größen skizziert sind.
Die Auswertung des Stromsignals als Antwort auf die erste Spannungsstufe (z.B. Integration) dient der Bestimmung der Elektrodenkapazität; hier treten keine elektrochemischen Effekte auf. In dem Stromverlauf der zweiten Spannungsstufe treten als Überlagerung elektrochemische Effekte (Pumpstrom) sowie kapazitative Anteile auf, wobei jetzt die kapazitativen Anteile durch die vorangegangene Bestimmung der Elekrodenkapazität in der ersten Stufe während t2 präzise eliminiert werden können. Dieses Verfahren erbringt den Vorteil einer bestmöglichen Kompensation von kapazitativen Störeinflüssen und damit eine erhöhte Messgenauigkeit.

Zu Variante c):

Dieses Verfahren verwendet Spannungsrampen, die linear verlaufen können. Die Zeit t2 während der die Messspannung anliegt wird hier in die Zeitdauer der ansteigenden Rampe t2a und der absteigenden Rampe t2b unterteilt; vergleiche Fig. 8A und 8B. Vorteil dieser Methode ist, dass die kapazitiven Anteile bei einer linearen Rampe zu einem konstanten Hintergrundstrom führen. Wenn die angelegte Spannung über der Zersetzungsspannung liegt, setzt die elektrochemische Reaktion ein, wodurch ein zusätzlicher Pumpstrom auftritt. Als Folge bildet sich im Stromverlauf ein Peak aus, dessen Fläche charakteristisch für die Menge des abzupumpenden Gases in der Kavität ist.

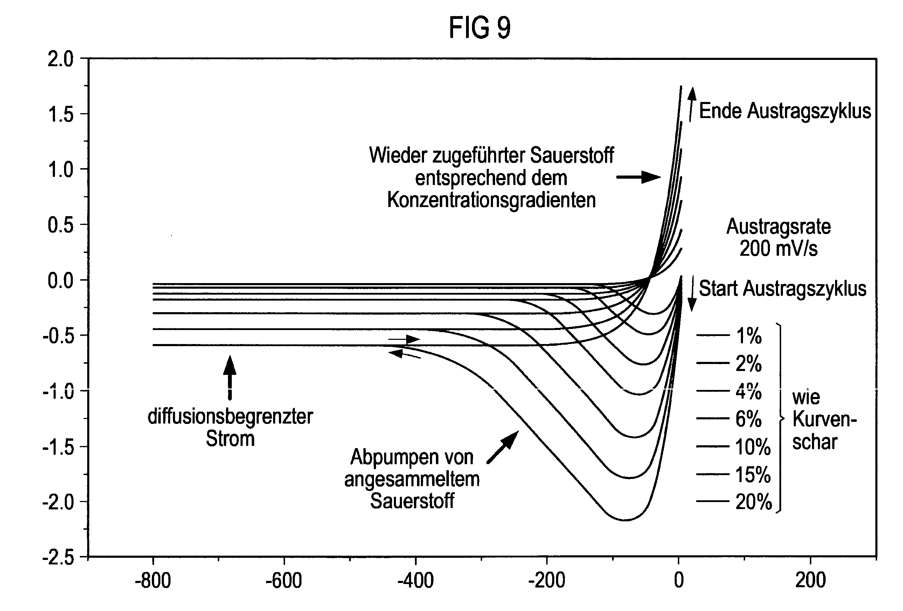

In Fig. 9 ist ein das Ergebnis der Simulation eines derartigen Betriebs dargestellt, wobei bewusst die Effekte der Elektrodenkapazitäten zu Null gesetzt wurden. Fig. 9 zeigt den klaren Zusammenhang zwischen der Gaskonzentration in der Umgebungsatmosphäre und der Integralfläche (Stromintegral über die Zeit) während des "Leerpumpens" der Kammer.
Selbstüberwachungsfunktionen können in dieses Verfahren durch intelligente Auswertung gut integriert werden.

**1**. Überwachung, ob ein Fehler bei der Strommessung vorliegt:

Die Messung des Absolutwertes des Stroms $I_m$ gibt die Information über die Anzahl n der aus dem Volumen V abgepumpten Moleküle pro Zeiteinheit dn/dt; z ist dabei die Ionenwertigkeit und e die Elementarladung

$$I_m = z \, e \, dn/dt$$

die Stromabnahme dI/dt ist (bei konzentrationsabhängiger Aktivität der Elektroden) direkt korreliert mit der Konzentrationsabnahme dc/dt

$$dI/dt = \text{const } dc/dt = \text{const}/V \, dn/dt.$$

Mit dem Volumen V der Messkavität.
Die Gleichung sagt aus, dass I und dI/dt in einem ganz festen (durch Geometriegrößen gegebenen) Verhältnis zueinander stehen müssen.

$$I/(dI/dt) = z \, e \, V/\text{const}$$

Wenn das Verhältnis I/(dI/dt) von diesem festen Wert abweicht liegen entweder Fehlmessungen des Pumpstroms entweder durch kapazitative Effekte oder durch Leckströme des Aufbaus vor und das Sensorsignal kann nicht mehr als aussagekräftig bzw. reproduzierbar angenommen werden.

**2**. Überprüfen, ob die Elektroden noch ausreichende katalytische Aktivität haben:

Besonders schwefel- und siliziumhaltige Abgasbestandteile können zu einer Vergiftung der zur Messung benötigten katalytischen Aktivität der Elektroden führen.
Es gilt die allgemeine Regel: je katalytisch aktiver die Elektrode ist, umso höher ist der Pumpstrom bei einer gewissen Gaskonzentration. Daraus abgeleitet kann nach Auswertung der Messung, die nach Elimination kapazitiver Effekte die Gaskonzentrationsbestimmung (durch Stromintegration) beinhaltet einfach überprüft werden, ob der Pumpstrom einen gewissen aufbau- und konzentrationstypischen Maximalwert erreicht hat. Wenn nicht ist die Elektrode nicht mehr aktiv genug und es kann ein Signal zum anstehenden Sensorwechsel gegeben werden.

**Patentansprüche**

1. Verfahren zum Auslesen vom Pumpsensoren, bei dem

   - zuerst ein Messgas über eine einstellbare erste Zeit ($t_1$) in einer Kavität des Pumpsensors gesammelt wird und
   - anschließend während einer einstellbaren zweiten Zeit ($t_2$) die gesammelte zu detektie-

rende Gasmenge durch Anlegen einer Pumpspannung an mindestens einer Pumpstufe umgesetzt wird.

2. Verfahren nach Anspruch 1, bei dem die Auslesung des Sensors intermittierend geschieht.

3. Verfahren nach einem der vorhergehenden Ansprüche, bei dem während der ersten Zeit ($t_1$) entweder keine Spannung an der Pumpstufe anliegt oder eine Spannung, bei der die zu detektierende Gaskomponente noch nicht umgesetzt wird.

4. Verfahren nach einem der vorhergehenden Ansprüche, bei dem der Pumpsensor während der ersten Zeit ($t_1$) als potentiometrische Sonde verwendbar ist, wenn keine äußere Spannung anliegt.

5. Verfahren nach einem der vorhergehenden Ansprüche, bei dem die Dauer der ersten Zeit ($t_1$) derart ausgelegt wird, dass die Gleichgewichtskonzentration des Messgases in der Kavität ungefähr gleich ist mit der Konzentration in der Umgebungsatmosphäre.

6. Verfahren nach einem der vorhergehenden Ansprüche, bei dem in Anschluss an die erste Zeit ($t_1$) sowohl die zweite Zeit ($t_2$) als auch eine dritte Zeit ($t_3$), in der kapazitive Effekte abklingen, beginnen und die nach der dritten Zeit ($t_3$) beginnende Messung nicht in den Bereich der Abklingphase fällt.

7. Verfahren nach einem der vorhergehenden Ansprüche, bei dem während der zweiten Zeit ($t_2$) eine konstante Spannung angelegt ist.

8. Verfahren nach einem der Ansprüche 1 bis 6, bei dem während der zweiten Zeit ($t_2$) zwei unterschiedliche konstante Spannungen ($Um_1$, $Um_2$) hintereinander angelegt werden, wobei die erste Spannung ($Um_1$) unterhalb der Zersetzungsschwelle liegt und die zweite Spannung ($Um_2$) oberhalb der Zersetzungsschwelle des Messgases liegt.

9. Verfahren nach Anspruch 8, bei dem die Auswertung des Stromsignals als Antwort auf die erste Spannung ($Um_1$) zur Bestimmung der Elektrodenkapazität herangezogen wird um die während des Anliegens der zweiten Spannung ($Um_2$) auftretenden Effekte der Elektrodenkapazität zu kompensieren.

10. Verfahren nach einem der Ansprüche 1 bis 6, bei dem während der zweiten Zeit ($t_2$) in einer Zeit ($t_2a$) zuerst eine linear ansteigenden Spannungsrampe und in einer Zeit ($t_2b$) eine linear abfallende Spannungsrampe verwendet wird, wobei die Zersetzungsschwelle während der Zeit ($t_2a$) überschritten wird.

11. Verfahren nach einem der vorhergehenden Ansprüche, bei dem zur Selbstüberwachung des Sensors eine Überwachung des Strommessung durchgeführt wird, wobei der Absolutwert des Stroms $I_m$ mit der Anzahl n der aus dem Volumen V der Kavität abgepumpten Gasmoleküle nach folgender Gleichung zusammenhängt:

$$I_m = z \cdot e \cdot dn/dt$$

mit z als der Ionenwertigkeit der Gasmoleküle und e als Elementarladung.

12. Verfahren nach einem der vorhergehenden Ansprüche, bei dem das durch die Sensorgeometrie vorgegebene feste Verhältnis zwischen dem Strom I und der zeitlichen Änderung des Stromes dI/dt entsprechend der folgenden Gleichung zur Eliminierung von Fehlmessungen herangezogen wird:

$$I / (dI / dt) = z \cdot e \cdot V / const.$$

13. Verfahren nach einem der vorhergehenden Ansprüche, bei dem durch Überwachung auf die Ausbildung eines Maximalwertes im Pumpstrom die ausreichende katalytische Aktivität der Elektroden überprüft wird.

## FIG 1

Gas

Diffusionskanal

3

Elektrode 1

$ZrO_2$

$O^{2-}$

$I$

$U = konst.$

Gegenelektrode 2

## FIG 2

$O^{2-}$ $O^{2-}$ $O^{2-}$ $O^{2-}$

NO
$O_2$

$O_2$ $O_2$ $O_2$ NO $N_2$ NO $N_2$

$O_2$ $O_2$ $O_2$ NO $N_2$ NO $N_2$

$O^{2-}$ $O^{2-}$ $O^{2-}$ $O^{2-}$

$I_1$ $I_2$

$U_1$ $U_2$

$|U_1| < |U_2|$

Reduktion von $O_2$     Reduktion von NO

$I \sim P_{O_2}$     $I \sim P_{NO}$

# FIG 3

erste Pumpzelle

zweite Pumpzelle

zweite Sensorzelle

erste / zweite Pumpelektrode (+)

$NO_x + O_2$

erste Pumpelektrode (-)

zweite Pumpelektrode (-)

400 mV

erste interne Kavität

zweite interne Kavität

erster Diffusionsweg

zweiter Diffusionsweg

Messelektrode

Referenzelektrode

Luftströmung

Heizung

300 mV

400 mV

erste Sensorzelle

$NO_x$ Sensorzelle

EP 1 229 324 A1

## FIG 4A

poröser
Diffusionskanal ⌐ ⌐ Elektroden ⌐ ⌐ Glasdichtung

Gas ⟶

YSZ

## FIG 4B

### Vorderseite

T-Fühler ⌐ 1. Pumpelektrode ⌐ ⌐ 2. Pumpelektrode

Gaseinlaß ⌐ ⌐ Diffusionskanal

## FIG 4C

### Rückseite

Heizelement ⌐ ⌐ Gegenelektrode

## FIG 5

Eindiffusion

c/c0

1.2
1.0
0.8
0.6
0.4
0.2
0.0

0    100   200   300   400   500   600   700   800   900

t1: Zeit in ms

## FIG 6A

$U_m$

$U_{m2}$

t1    t2    t

## FIG 6B

$I_m$

t3

$I_G$

t1    t2    t

## FIG 7A

## FIG 7B

## FIG 8A

## FIG 8B

FIG 9

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | SOMOV S ET AL: "Gas analysis with arrays of solid state electrochemical sensors: Implications to monitor HCs and NOx in exhausts" SENSORS AND ACTUATORS B, ELSEVIER SEQUOIA S.A., LAUSANNE, CH, Bd. 36, Nr. 1, 1. Oktober 1996 (1996-10-01), Seiten 409-418, XP004061105 ISSN: 0925-4005 * das ganze Dokument * | 1-13 | G01N27/407 G01N27/49 |
| A | GÖPEL W ET AL: "Trends in the development of solid state amperometric and potentiometric high temperature sensors" SOLID STATE IONICS, NORTH HOLLAND PUB. COMPANY. AMSTERDAM, NL, Bd. 136-137, 2. November 2000 (2000-11-02), Seiten 519-531, XP004225981 ISSN: 0167-2738 * das ganze Dokument * | 1-13 | |
| A | DE 196 10 911 A (DITTRICH ELEKTRONIK J) 25. September 1997 (1997-09-25) * Spalte 2, Zeile 9-15 * * Spalte 2, Zeile 39 - Zeile 47 * * Spalte 4, Zeile 5 - Zeile 27 * | 1-13 | RECHERCHIERTE SACHGEBIETE (Int.Cl.7) G01N |
| A | EP 0 924 514 A (NGK INSULATORS LTD) 23. Juni 1999 (1999-06-23) * Absatz '0018! - Absatz '0026! * | 1-13 | |
| A | EP 0 964 246 A (PANAMETRICS) 15. Dezember 1999 (1999-12-15) * das ganze Dokument * | 1-13 | |

Der vorliegende Recherchenbericht wurde für alle Patentansprüche erstellt

| Recherchenort | Abschlußdatum der Recherche | Prüfer |
|---|---|---|
| MÜNCHEN | 25. April 2002 | Stussi, E |

**ANHANG ZUM EUROPÄISCHEN RECHERCHENBERICHT
ÜBER DIE EUROPÄISCHE PATENTANMELDUNG NR.**                      EP 02 10 0061

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-04-2002

| Im Recherchenbericht angeführtes Patentdokument | Datum der Veröffentlichung | Mitglied(er) der Patentfamilie | Datum der Veröffentlichung |
|---|---|---|---|
| DE 19610911 A | 25-09-1997 | DE 19610911 A1 | 25-09-1997 |
| EP 0924514 A | 23-06-1999 | JP 11183436 A<br>EP 0924514 A2 | 09-07-1999<br>23-06-1999 |
| EP 0964246 A | 15-12-1999 | US 6177001 B1<br>EP 0964246 A2<br>JP 2000009683 A | 23-01-2001<br>15-12-1999<br>14-01-2000 |

EPO FORM P0461

Für nähere Einzelheiten zu diesem Anhang : siehe Amtsblatt des Europäischen Patentamts, Nr.12/82